# EUROPEAN PATENT APPLICATION

(11) **EP 4 183 762 A1**
(43) Date of publication of application: **24.05.2023**
(21) Application number: 22206931.2
(22) Date of filing: 11.11.2022
(51) Int. Cl.: C04B 35/80

(54) **CERAMIC MATRIX COMPOSITE ARTICLE AND METHOD OF MAKING THE SAME**

(30) Priority: 19.11.2021 US 202117530953
(71) Applicant: Raytheon Technologies Corporation, Farmington, CT 06032 (US)
(72) Inventor: ENOS, Shaun M., Manchester, 06042 (US); READ, Kathryn S., Marlborough, 06447 (US); KONOPASKE, Zachary P., West Hartford, 06119 (US)
(74) Representative: Dehns

(57) **Abstract**

A method of making a ceramic matrix composite component includes forming a ceramic matrix composite component by infiltrating an array of ceramic-based reinforcements with a ceramic-based matrix, applying filler particles to a surface of the ceramic matrix composite component such that the filler particles fill in gaps between adjacent ones of the ceramic-based reinforcements, and infiltrating the filler particles with a filler matrix. A ceramic matrix composite component is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section may include low and high pressure compressors, and the turbine section may also include low and high pressure turbines.

Ceramic matrix composites ("CMC") are being considered for certain gas turbine engine components, and have usefulness in other fields as well. For instance, CMCs can be employed for airfoils in the compressor or turbine sections of a gas turbine engine. Among other attractive properties, CMCs have high temperature resistance. Despite this attribute, however, there are unique challenges to implementing CMCs in airfoils.

### SUMMARY

A method of making a ceramic matrix composite component according to an exemplary embodiment of this disclosure, among other possible things includes forming a ceramic matrix composite component by infiltrating an array of ceramic-based reinforcements with a ceramic-based matrix, applying filler particles to a surface of the ceramic matrix composite component such that the filler particles fill in gaps between adjacent ones of the ceramic-based reinforcements, and infiltrating the filler particles with a filler matrix.

In a further example of the foregoing, the reinforcements are fibers.

In a further example of any of the foregoing, the fibers are woven or braided to form the array.

In a further example of any of the foregoing, the filler particles are disposed in a liquid carrier to form a slurry. The applying step includes applying the slurry to the surface of the ceramic matrix composite component.

In a further example of any of the foregoing, the method includes the step of evaporating the liquid carrier after the applying step.

In a further example of any of the foregoing, after the applying step, the filler particles are at the surface of the ceramic matrix composite component but not in the array of ceramic-based reinforcements.

In a further example of any of the foregoing, after the applying step, the filler particles fill more than 30% of the volume of the gaps.

In a further example of any of the foregoing, after the step of infiltrating the filler particles with the filler matrix, the filler matrix is disposed over the ceramic-based reinforcements and ceramic-based matrix, and is in the gaps.

In a further example of any of the foregoing, the filler particles are oxide, carbide, or boride particles.

A ceramic matrix composite component according to an exemplary embodiment of this disclosure, among other possible things includes an array of ceramic-based reinforcements disposed in a ceramic-based matrix. The ceramic-based reinforcements are arranged in an array. There are gaps between adjacent ones of the ceramic-based reinforcements at a surface of the ceramic matrix composite component. The ceramic matrix composite also includes a filler composition disposed in the gaps. The filler composition includes filler particles disposed in a filler matrix.

In a further example of the foregoing, the reinforcements are fibers.

In a further example of any of the foregoing, the fibers are woven or braided to form the array.

In a further example of any of the foregoing, the filler particles are not within the array of ceramic-based reinforcements.

In a further example of any of the foregoing, the filler matrix is the same material as the ceramic-based matrix and the filler matrix and ceramic-based matrix are continuous with one another.

In a further example of any of the foregoing, the filler matrix is disposed over the ceramic-based reinforcements and ceramic-based matrix, and is in the gaps.

In a further example of any of the foregoing, the filler matrix is a different material than the ceramic-based matrix.

In a further example of any of the foregoing, the filler matrix provides at least one of mechanical, thermal, and environmental protection to the ceramic matrix composite component.

In a further example of any of the foregoing, the filler particles fill more than 30% of the volume of the gaps.

In a further example of any of the foregoing, the filler particles have a uniform distribution of particle size between 0.5 and 100 microns.

In a further example of any of the foregoing, the ceramic matrix composite component is a component of a gas turbine engine.

### BRIEF DESCRIPTION OF THE DRAWINGS

Figure 1 schematically shows an example gas turbine engine.
Figure 2 schematically shows a detail view of woven fibers for a ceramic matrix composite component.
Figure 3 schematically shows a detail view of a ceramic matrix composite component.
Figure 4 shows a detail view of the ceramic matrix composite component of Figure 2 with filler particles.
Figure 5 shows a detail view of the ceramic matrix composite component of Figure 2 with filler particles and a filler matrix.
Figure 6 shows a method of making the ceramic matrix composite component of Figures 3-5.

### DETAILED DESCRIPTION

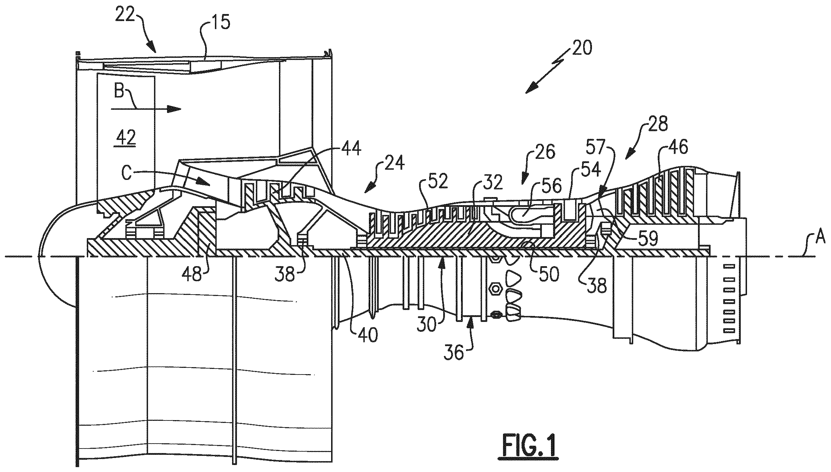

Figure 1 schematically illustrates a gas turbine engine 20. The gas turbine engine 20 is disclosed herein as a two-spool turbofan that generally incorporates a fan section 22, a compressor section 24, a combustor section 26, and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38, It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Alternatively, the low pressure compressor 44 includes a forward hub 45A and an aft hub 45B driven by the inner shaft 40.

Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. In the illustrated example, the mid-turbine frame 57 only includes a bearing system 38 that supports the high spool 50 and the mid-turbine frame 57 does not support the low speed spool 30. Additionally, a pair of bearing systems 38E are located adjacent a downstream end of the low speed spool 30 adjacent an exhaust outlet of the gas turbine engine to support the low speed spool 30. Furthermore, a bearing assembly 38C can be located radially inward from the combustor 56 and supported by a diffuser case and be used in place of or in addition to the bearing system 38 associated with the mid-turbine frame 57. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49. In one example, the low pressure compressor 44 includes at least 4 stages and no more than 7 stages and in another example, the low pressure compressor 44 includes at least 5 stages and no more than 7 stages. In both examples, the high pressure compressor 52 includes more stages than the low pressure compressor.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. With the planetary gear system, the ring gear is fixed from rotation relative to the engine static structure 36 and the carrier rotates with the fan 42. With the star gear system, the carrier is fixed from rotation relative to the engine static structure 36 and the ring gear rotates with the fan 42. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4, The gear reduction ratio may be less than or equal to 4.0 4.2. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point, The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40, "Corrected fan tip speed" is the actual fan tip speed in ft/sec divided by an industry standard temperature correction of [(Tram °R) / (518.7 °R)]0.5, The corrected fan tip speed can be less than or equal to 1150.0 ft / second (350.5 meters/second), and can be greater than or equal to 1000.0 ft / second (304.8 meters/second).

Some of the components of the gas turbine engine 20, such as airfoils in the turbine section 28, can be made of ceramic matrix composite (CMC) materials. In general, CMC components include ceramic-based reinforcements, such as fibers, in a ceramic-based matrix. CMC components optionally include coatings that can provide mechanical, thermal, and/or environmental protection to the underlying CMC material.

In the example where the reinforcements are fibers, the fibers can be arranged in a variety of ways that are known in the art, such as unidirectionally, in various weaves including three-dimensional weaves, braids, etc. In some more particular examples, the fibers can be arranged in bundles or tows. However, it should be understood that other non-fiber reinforcements such as grains or particles are also contemplated.

Moreover, the CMC components can include several plies or layers of CMC material stacked and bonded to one another to form a three-dimensional component.

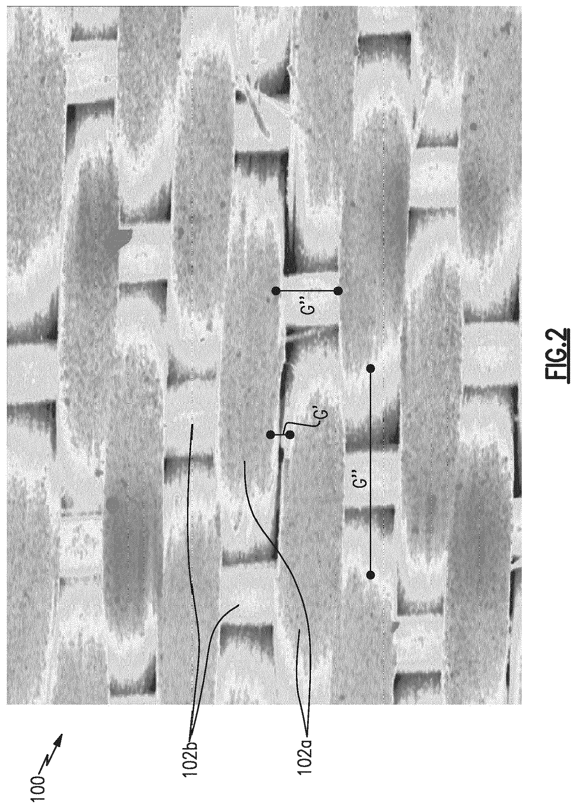

Figure 2 shows a detail top-down view of an example fiber array for a CMC component 100. In this example, the fiber array includes a first set of fibers 102a and a second set of fibers 102b that are woven together. The fibers 102a/102b comprise a ceramic-based material. Though the sets of fibers 102a/102b in this example are oriented perpendicular to one another, it should be understood that other weaves, other nonwoven fiber configurations, or non-fiber reinforcements are also contemplated for the component 100. Additionally, in Figure 2, the first and second sets of fibers 102a/102b comprise individual fibers. In other examples, the first and second sets of fibers 102a/102b can comprise bundles or tows of fibers in place of the individual fibers.

In the particular weave pattern of Figure 2, the first set of fibers 102a are arranged generally in a horizontal direction and each have an extent that lays on top of the second set of fibers 102b, which are arranged generally in a vertical direction. The first set of fibers 102a is therefore nearest the surface of the component 100 in the example of Figure 2. As shown therein, there are various gaps G at the surface between adjacent ones of the fibers 102a. Some gaps G' are due to spacing between adjacent ones of the first set of fibers 102a. Other gaps G" are the result of spaces formed due to the weave pattern of the first set of fibers 102a with the second set of fibers 102b.

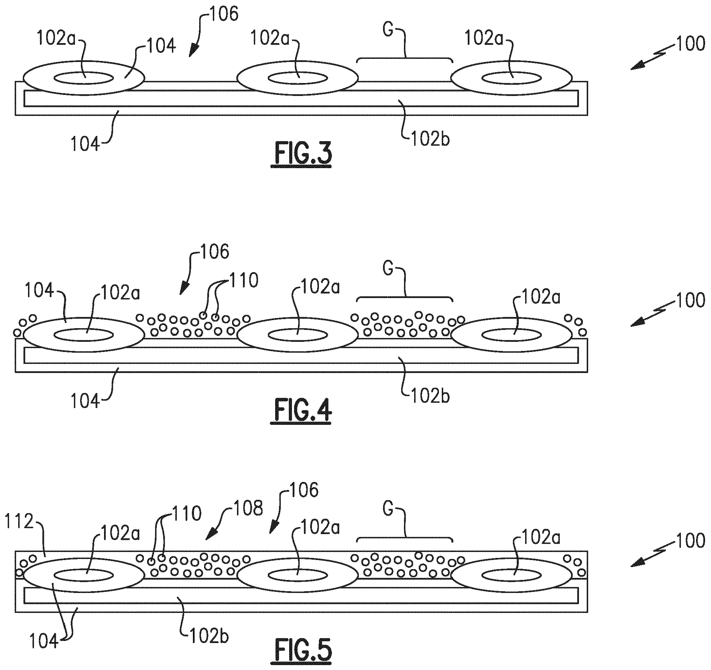

Figure 3 schematically shows a cutaway view of a surface 106 of the component 100 including several of the first set of fibers 102a infiltrated with a matrix material 104. The matrix material 104 comprises a ceramic-based material. Though in this example only certain of the first set of fibers 102a are shown, it should be understood that in other examples the surface 106 of the component 100 could also or alternatively include fibers of the second set of fibers 102b, depending on the weave pattern or other arrangement of fibers 102a/102b. The surface 106 of the component 100 includes gaps G between adjacent ones of the fibers 102a/102b which could be either of the gaps G' and G" discussed above. The gaps G cause the surface 106 of the component 100 to be rough. Reducing the surface roughness improves the aerothermal, aerodynamic, and durability performance of the component 100. To that end, as shown in Figures 4-5, a filler composition 108 is disposed in gaps G. The filler composition 108 fills in the gaps G to smooth the surface 106 of the component 100.

The filler composition 108 includes filler particles 110 disposed in a filler matrix 112. The filler particles 110 can be oxide, carbide, or boride particles including but not limited to silicon carbide (SiC), silicon oxycarbide (SiOC), boron carbide (B₄C), hafnium boride (HfB₂), zirconium boride (ZrB2), ytterbium oxide (Yb₂O₃), aluminum oxide (Al₂O₃), and hafnium oxide (HfO₂).

In some examples, the filler particles 110 have a size (diameter) between about 0.5 and about 100 microns. In a particular example, the filler particles 110 have a size (diameter) between about 5 and about 50 microns. In a further example, the filler particles 110 have a size (diameter) between about 5 and about 30 microns. A ratio of a diameter of the fibers 102a/102b to the size (diameter) of the filler particles 110 can be between about 0.1 and about 24. The filler particles 110 can have a single modal or uniform size distribution, e.g., the majority (more than half) of the particles have a size within about 5% of a selected particle size. In other examples, however, the filler particles 110 can have bi- or other multi-modal size distributions. As used herein, the term "about" has the typical meaning in the art, however in a particular example "about" can mean deviations of up to 10% of the values described herein.

In one example, the filler particles 110 are located primarily, or fully, in the gaps G at the surface 106, and are not within the fiber array 102a/102b or existing matrix 104.

In one example, the filler particles 110 fill more than 30% of the volume of the gaps G. In a further example, the filler particles 110 fill more than 50% of the volume of the gaps G. In general, the higher the percentage of volume of gaps G filled with filler particles 110, the lower the surface roughness of the component 100.

In the example of Figure 5, the filler matrix 112 is disposed over substantially the entire surface 106, e.g., it is disposed on the fibers 102a/102b and matrix 104 as well as in the gaps G. In some examples, the material of the filler matrix 112 is selected such that the filler matrix 112 serves as a coating or barrier layer for the component 100. In another example, the filler matrix 112 is the same material as the matrix 104 of the component 100 such that in the final component 100 the filler matrix 112 is continuous with the matrix 104.

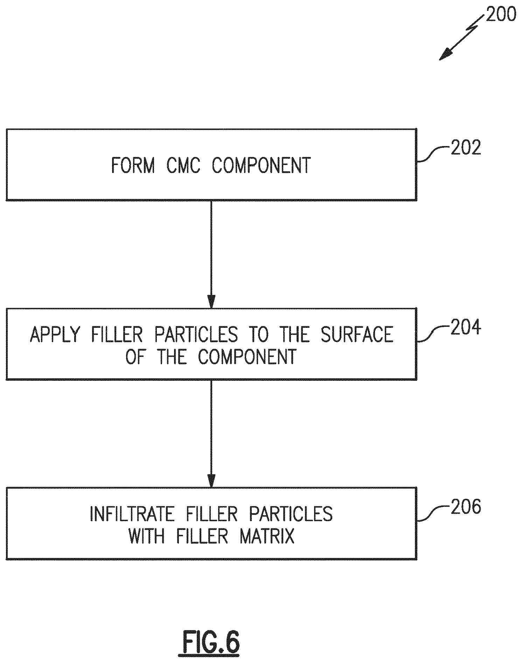

Figure 6 shows an example method 200 for making the component 100. In step 202, a CMC component 100 having ceramic-based reinforcements, such as fibers 102a/102b, disposed in a matrix 104 is formed by any known method. For instance, the fibers 102a/102b are arranged in an array in a desired configuration, and the fiber array is infiltrated with the matrix 104. The matrix 104 infiltration can be accomplished by any known method such as chemical vapor deposition (CVD), chemical vapor infiltration (CVI), polymer infiltration pyrolysis (PIP), or melt infiltration (MI). Step 202 can also include densification or curing steps as are known in the art.

In step 204, the filler particles 110 are applied to the surface 106 and fill in the gaps G as shown in Figure 4 discussed above. As noted above, in some examples, the filler particles 110 are primarily, or fully, in the gaps and do not migrate into the fiber array 102a/102b, after the applying step 204. The filler particles 110 can be applied to the surface 106 by painting, injecting, air spraying, pipetting or dropping, or another suitable method.

In one example, the filler particles 110 are dispersed in a liquid carrier to form a slurry for the applying step 204. The liquid carrier can be aqueous or alcohol, for instance. The slurry may also include dispersants or polymer additives such as poly vinyl alcohol (PVA), poly vinyl butyral (PVB), poly ethylene glycol (PEG), or a preceramic polymer, which can assist in binding the filler particles 110 to the surface 106 of the component 100 until the filler matrix 112 matrix can be deposited (as discussed below). In this example, the component 100 is subjected to an evaporation step to evaporate off the liquid carrier, leaving the filler particles 110 in the gaps G. The evaporation step can include heating or another method, depending on the liquid carrier used.

In step 206, the filler particles 110 are infiltrated with the filler matrix 112 as shown in Figure 5 discussed above. As noted above, the filler matrix 112 may be disposed over substantially the entire surface 106, including over the fiber array 102a/102b and matrix 104 and in the gaps G. The infiltration step 206 can be performed by any suitable method, such as the methods discussed above for infiltrating the fiber array 102a/102b with the matrix 104.

In some examples, the filler particles 110 can act as nucleation sites for the filler matrix 112, encouraging the formation of a uniform filler matrix 112.

In some examples, optional processing steps may be performed after the infiltration step 206, such as densification or curing steps to harden the filler matrix 112 and trap the filler particles 110 in the gaps G.

As noted above, reducing the surface roughness of the component 100 improves the aerothermal, aerodynamic, and durability performance of the component 100. Because the underlying component 100 is unaltered by the application of the filler composition 108 according to the above-described method 200, the surface roughness is reduced without debiting the characteristics of the reinforcements such as fibers 102a/102b, e.g., by changing their shape or size. Moreover, above-described method 200 can be employed to improve existing CMC components because there is no need to alter the underlying material.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A method of making a ceramic matrix composite component (100), comprising:
forming a ceramic matrix composite component (100) by infiltrating an array of ceramic-based reinforcements (102a, 102b) with a ceramic-based matrix (104);
applying filler particles (110) to a surface (106) of the ceramic matrix composite component (100) such that the filler particles (110) fill in gaps (G, G', G") between adjacent ones of the ceramic-based reinforcements (102a, 102b); and
infiltrating the filler particles (110) with a filler matrix (112).

2. The method of claim 1, wherein the filler particles (110) are disposed in a liquid carrier to form a slurry, and wherein the applying step includes applying the slurry to the surface of the ceramic matrix composite component (100), and wherein the method optionally further comprises the step of evaporating the liquid carrier after the applying step.

3. The method of claim 1 or 2, wherein: after the applying step, the filler particles (110) are at the surface (106) of the ceramic matrix composite component (100) but not in the array of ceramic-based reinforcements (102a, 102b); and/or the filler particles (110) fill more than 30% of the volume of the gaps (G, G', G").

4. The method of any preceding claim, wherein after the step of infiltrating the filler particles (110) with the filler matrix (112), the filler matrix (112) is disposed over the ceramic-based reinforcements (102a, 102b) and ceramic-based matrix (104), and is in the gaps (G, G', G").

5. The method of any preceding claim, wherein the filler particles (110) are oxide, carbide, or boride particles.

6. A ceramic matrix composite component (100), comprising:
an array of ceramic-based reinforcements (102a, 102b) disposed in a ceramic-based matrix (104), wherein the ceramic-based reinforcements (102a, 102b) are arranged in an array, and wherein there are gaps (G, G', G") between adjacent ones of the ceramic-based reinforcements (102a, 102b) at a surface (106) of the ceramic matrix composite component (100); and
a filler composition (108) disposed in the gaps (G, G', G"), the filler composition (108) including filler particles (110) disposed in a filler matrix (112).

7. The method of any of claims 1 to 5 or the ceramic matrix composite component (100) of claim 6, wherein the ceramic-based reinforcements (102a, 102b) are fibers (102a, 102b).

8. The method or the ceramic matrix composite component (100) of claim 7, wherein the fibers (102a, 102b) are woven or braided to form the array.

9. The ceramic matrix composite component (100) of any of claims 6 to 8, wherein the filler particles (110) are not within the array of ceramic-based reinforcements (102a, 102b).

10. The ceramic matrix composite component (100) of any of claims 6 to 9, wherein the filler matrix (112) is the same material as the ceramic-based matrix (104) and the filler matrix (112) and ceramic-based matrix are (104) continuous with one another.

11. The ceramic matrix composite component (100) of any of claims 6 to 10, wherein the filler matrix (112) is disposed over the ceramic-based reinforcements (102a, 102b) and ceramic-based matrix (104), and is in the gaps (G, G', G"), wherein the filler matrix (112) is optionally a different material than the ceramic-based matrix (104).

12. The ceramic matrix composite component (100) of any of claims 6 to 11, wherein the filler matrix (112) provides at least one of mechanical, thermal, and environmental protection to the ceramic matrix composite component (100).

13. The ceramic matrix composite component (100) of any of claims 6 to 12, wherein the filler particles (110) fill more than 30% of the volume of the gaps (G, G', G").

14. The ceramic matrix composite component (100) of any of claims 6 to 13, wherein the filler particles (110) have a uniform distribution of particle size between 0.5 and 100 microns.

15. The ceramic matrix composite component (100) of any of claims 6 to 14, wherein the ceramic matrix composite component (100) is a component (100) of a gas turbine engine (20).
